# FASCICULE DE BREVET EUROPEEN

(11) **EP 0 678 603 B1**
(45) Date de publication et mention de la délivrance du brevet: **17.09.1997**
(21) Numéro de dépôt: 95420103.4
(22) Date de dépôt: 18.04.1995
(51) Int. Cl.: D03C 3/40, F16F 13/02, F16F 1/12

(54) **Dispositif d'assemblage de l'extrémité d'un ressort hélicoidal par rapport à un autre organe**
Montagevorrichtung zur Befestigung des Endteils einer Spiralfeder an einem anderen Element
Mounting device for connecting the end of a coil spring to another element

(30) Priorité: 19.04.1994 FR 9405043
(43) Date de publication de la demande: 25.10.1995
(73) Titulaire: STAUBLI LYON, 69680 Chassieu (FR)
(72) Inventeur: Bassi, Dario, F-69970 Chaponnay (FR); Vessella, Patrick, F-69150 Decines (FR)
(74) Mandataire: Karmin, Roger

(56) Documents cités:
- EP-A- 0 533 636
- EP-A- 0 547 303
- DE-U- 8 913 482
- FR-A- 2 674 264
- US-A- 4 385 754

## Description

La présente invention se réfère aux dispositifs d'assemblage ou de liaison de l'extrémité d'un ressort hélicoïdal par rapport à un autre organe et elle vise plus particulièrement, bien que non exclusivement, un dispositif d'assemblage entre l'un des bouts d'un ressort hélicoïdal et le sommier d'un métier à tisser, l'autre bout dudit ressort étant en outre associé à la lisse d'une mécanique d'armure.

On sait que chaque crochet d'une mécanique d'armure du genre Verdol est associé à une multiplicité de cordons constituant ce qu'on appelle un harnais, chaque cordon étant attaché à l'extrémité supérieure d'une lisse dont l'extrémité inférieure est associée au bout supérieur d'un ressort hélicoïdal dont l'autre bout est fixe.

Chaque crochet des mécaniques d'armure modernes effectue de très nombreux déplacement en va-et-vient à une cadence élevée, de telle sorte que les ressorts sont soumis à des contraintes d'extension brutales qui entraînent quelquefois leur entrée en résonance et leur rupture. L'expérience a montré que cette rupture s'effectue généralement à quelques spires du bout du ressort qui est attaché à un organe fixe.

Les dispositifs d'assemblage ou de liaison connus entre le bout d'un ressort hélicoïdal et un autre organe tel qu'un organe fixe, sont généralement réalisés en une matière plastique moulée et ils comportent un embout fileté qui s'engage par vissage dans les premières spires du bout correspondant du ressort hélicoïdal. Lesdits dispositifs comportent en outre des moyens d'accrochage à un autre organe.

Un des dispositifs en question, qui a fait l'objet d'une demande de brevet FR-A-2 674 264, comporte en outre une pièce cylindrique en matériau élastique engagée à force dans l'extrémité correspondante du ressort de manière à amortir ses oscillations.

Mais un tel dispositif est inutilisable du fait que l'introduction de la pièce cylindrique à l'intérieur des spires du ressort est extrêmement difficile et entraîne très souvent la détérioration des spires du fait que les ressorts de rappel pour lisses de métier à tisser sont de très faibles dimensions. Un tel ressort est par exemple réalisé avec du fil de très petit diamètre enroulé pour constituer des spires d'environ 2 mm de diamètre.

Les perfectionnements qui font l'objet de la présente invention visent à remédier aux inconvénients des dispositifs déjà connus.

A cet effet, la pièce cylindrique faisant l'objet de la demande de brevet 2 674 264 est remplacée par un élément constitué d'au moins deux branches élastiques aptes à frotter sur les spires de ladite extrémité du ressort.

Le dessin annexé, donné à titre d'exemple, permettra de mieux comprendre l'invention, les caractéristiques qu'elle présente et les avantages qu'elle est susceptible de procurer :

Fig. 1 est une vue très schématique d'une partie d'un harnais de mécanique d'armure dont les lisses sont chacune rappelées par un ressort hélicoïdal.

Fig. 2 est une vue en perspective illustrant un premier mode d'excécution d'un dispositif d'assemblage ou de liaison suivant l'invention.

Fig. 3 est une vue en coupe illustrant le dispositif de fig. 2 à l'état monté par rapport à l'extrémité d'un ressort et d'un autre organe afin de relier ce dernier au ressort.

Fig. 4 est une coupe à plus grande échelle suivant IV-IV (fig. 3).

Fig. 5 illustre en perspective une variante d'exécution du dispositif de fig. 2.

Fig. 6 est une vue extérieure montrant le dispositif de fig. 5 à l'état monté par rapport à l'extrémité d'un ressort.

Fig. 7 est une coupe à plus grande échelle suivant VII-VII (fig. 6).

Fig. 8 illustre encore une autre forme d'exécution du dispositif suivant l'invention.

Fig. 9 montre un dispositif d'assemblage suivant l'invention réalisé par combinaison des dispositifs de fig. 2 et 8.

Fig. 10 est une illustration d'un autre mode d'exécution de l'invention, consistant à combiner les dispositifs de fig. 5 et 8.

Fig. 11 illustre un dernier mode de réalisation de l'invention consistant en un dispositif d'assemblage réalisé par combinaison des dispositifs illustrés en fig. 5 et 9.

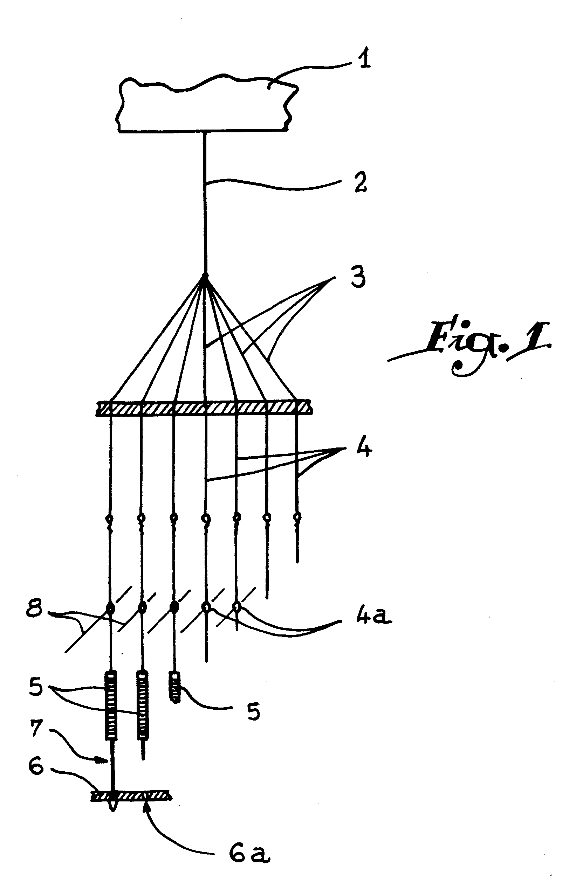

On a illustré très schématiquement en fig. 1 une partie d'une mécanique d'armure 1 comportant une multiplicité de crochets dont un seul 2 a été représenté.

L'extrémité inférieure de ce crochet est associée à une multiplicité de cordons 3 formant, à la manière bien connue, un harnais, tandis que l'autre extrémité de chaque cordon est accrochée à l'extrémité supérieure d'une lisse 4 dont l'extrémité inférieure est associée au bout supérieur d'un ressort hélicoïdal 5. Le bout inférieur de ce dernier est fixé à un organe fixe 6 au moyen d'une liaison 7. Chaque lisse comporte bien entendu un oeillet 4a traversé par un fil de chaîne 8.

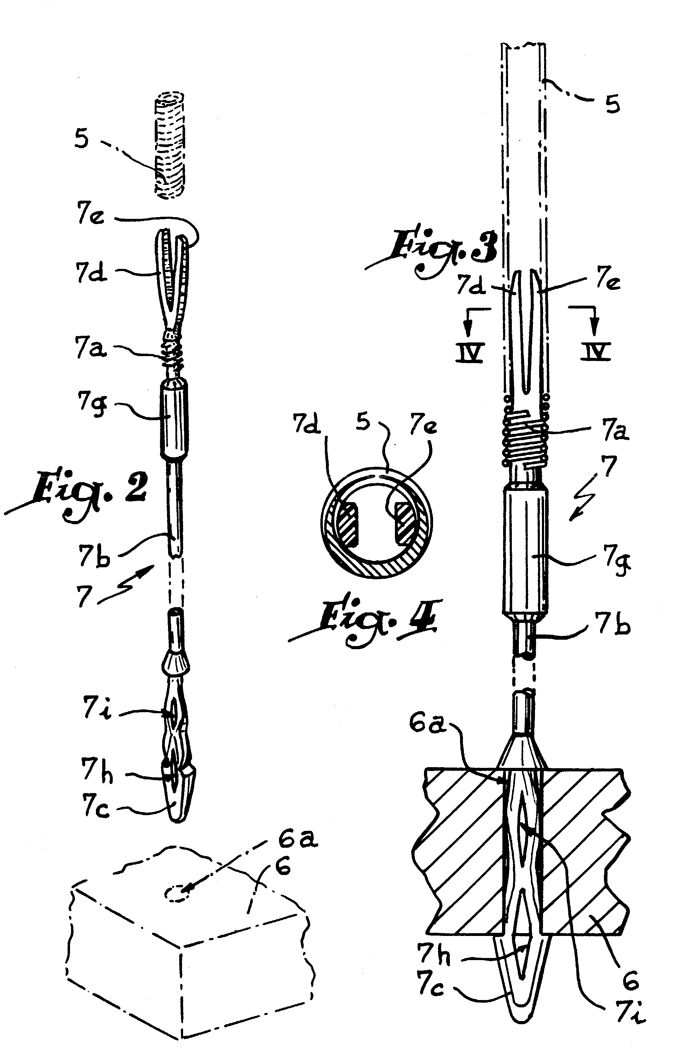

Comme illustré en fig. 2, le dispositif de liaison 7 établi suivant l'invention est réalisé sous la forme d'un dispositif comportant tout d'abord à la manière connue un embout fileté 7a qui se prolonge vers le bas par une tige 7b se terminant par un harpon 7c propre à s'engager dans une perforation 6a de l'organe fixe 6.

On observe que le harpon 7c comporte une ouverture transversale 7h disposée près de sa pointe pour faciliter, par contraction des parois de cette ouverture, le passage des redents de ladite pointe. Pour maintenir parfaitement le harpon dans la perforation 6a de l'organe 6, c'est-à-dire pour éviter tout mouvement axial dudit harpon dans la perforation, on lui fait comporter une partie souple 7i préférablement creuse dont l'encombrement extérieur est supérieur au diamètre du trou 6a. Ainsi, cette partie souple 7i prend élastiquement appui contre la paroi du trou 6a pour éviter tout jeu axial.

Conformément à l'invention, l'embout fileté 7a se prolonge à l'opposé du harpon 7c par deux branches élastiques 7d, 7e légèrement divergentes. Les faces extérieures des branches 7d, 7e, préférablement arrondies, se trouvent en gros inscrites dans une circonférence dont le diamètre est supérieur à celui interne du ressort 5. On observe que la tige 7b comporte une butée 7g de plus grand diamètre.

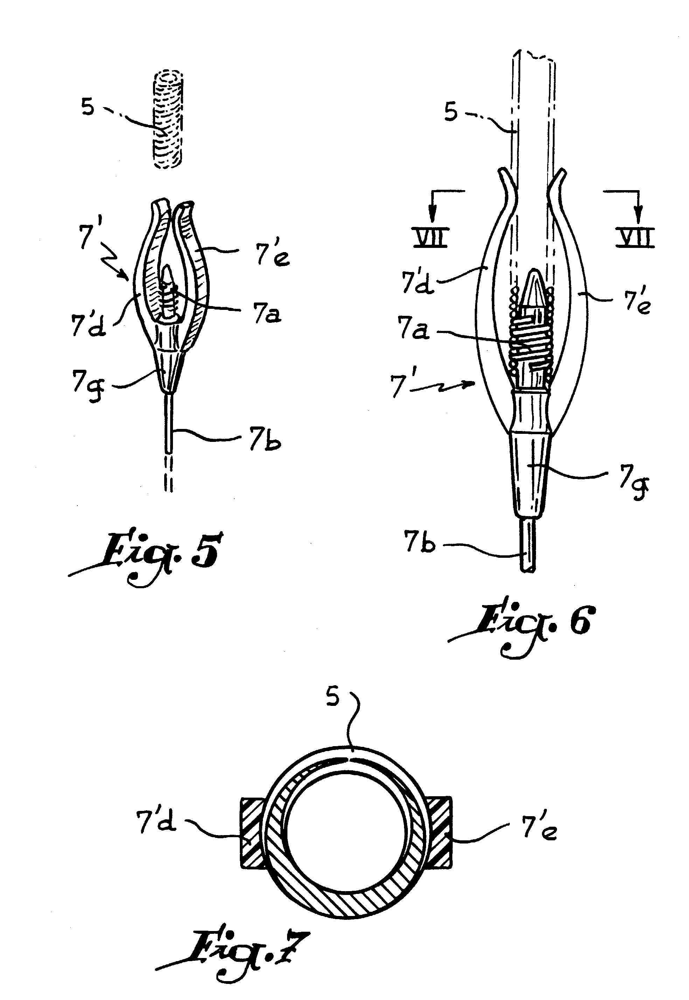

Pour assembler le ressort 5 et le dispositif suivant l'invention, il suffit d'engager à force les branches 7d, 7e à l'intérieur du bout correspondant du ressort jusqu'à ce que la première spire de ce dernier vienne prendre appui contre le début de l'embout fileté 7a. Celui-ci est alors vissé par rapport aux spires jusqu'à ce qu'il vienne en contact avec la butée 7g. On crée ainsi un frottement entre les spires libres du ressort qui se trouvent adjacentes aux spires engagées avec l'embout 7a et les branches 7d, 7e de sorte qu'au cours des élongations et des contractions des spires du ressort 5, celles-ci soient freinées ou amorties et ne puissent pas entrer en résonance. A cet effet, le dispositif suivant l'invention est réalisé par moulage, avantageusement par injection d'une seule pièce, en une matière plastique telle qu'une polyamide. Ce procédé de fabrication est très économique et permet l'obtention d'un dispositif d'assemblage qui soit résistant à la traction (fig. 3). On observe en fig. 4 qu'en section transversale, les faces extérieures des deux branches 7d, 7e peuvent être bombées de manière à coopérer le mieux possible avec l'intérieur des spires du ressort 5. Le rayon de courbure desdites faces extérieur étant voisin de celui de l'intérieur du ressort.

Suivant une première variante de l'invention illustrée en fig. 5, on a prévu un dispositif de liaison 7' dont les branches 7'd et 7'e sont issues de la butée 7g et s'étendent de part et d'autre de l'embout fileté 7a. On observe que les branches 7'd, 7'e sont convergentes, de telle sorte que sur une partie au moins de la surface de leurs faces intérieures en vis-à-vis, lesdites faces soient distantes d'une valeur inférieure au diamètre extérieur du ressort 5.

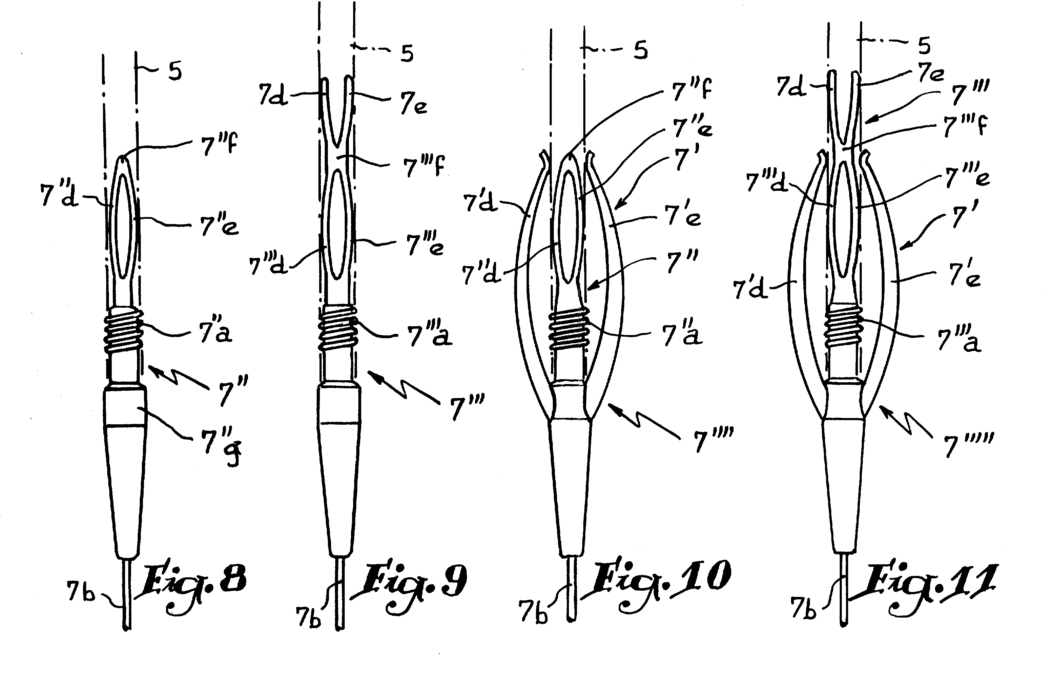

Pour assembler le ressort 5 et le dispositif de liaison 7' suivant la variante considérée, il faut légèrement écarter les deux branches 7'd, 7'e, puis introduire le bout correspondant du ressort 5 entre ces branches pour que l'embout fileté 7a vienne se visser avec les spires dudit bout jusqu'à ce que celui-ci vienne porter contre la butée 7g. En relâchant les deux branches, elles compriment légèrement le ressort et créent avec ses spires libres un frottement évitant l'entrée en résonance du ressort lors de ses élongations et de ses contractions (fig. 6). Comme illustré en fig. 7 les faces internes des branches 7'd, 7'e pourraient être prévues concaves de manière à bien coopérer avec l'extérieur des spires du ressort 5.

Suivant le mode d'exécution de fig. 8 qui constitue une variante 7'' du dispositif de liaison, les deux branches 7''d, 7''e sont cowbes et réunies au niveau de leurs extrémités libres pour former une pointe 7''f. Comme pour le mode d'exécution de fig. 2, les faces extérieures des branches 7''d, 7''e se trouvent en gros instrites dans une circonférence dont le diamètre est supérieur à celui interne du ressort 5.

Pour assembler le ressort 5 et le dispositif de liaison 7'', il suffit d'engager à force les branches 7''d, 7''e à l'intérieur du ressort jusqu'à ce que sa première spire vienne coopérer avec le début de l'embout fileté 7''a. Celui-ci est alors vissé par rapport aux spires jusqu'à ce que le bout du ressort vienne en contact de la butée 7''g. Les spires du ressort adjacentes à celles qui coopèrent avec l'embout fileté 7''a sont alors légèrement écartées pour créer un frottement afin que le ressort ne puisse pas entrer en résonance lors de ses élongations et de ses contractions.

Une autre variante 7''' du dispositif de liaison suivant l'invention est constituée par la combinaison des liaisons illustrées en fig. 2 et 8. Ce mode d'exécution préféré de l'invention comprend donc en partant de l'embout fileté 7'''a deux branches courbes élastiques 7'''d, 7'''e réunies au niveau de leurs extrémités libres pour former une embase 7'''f à partir de laquelle partent les deux branches divergentes semblables 7d et 7e de fig. 2.

La mise en place du dispositif de liaison 7''' à l'intérieur du ressort 5 s'effectue en introduisant successivement les deux branches divergentes puis les deux branches courbes à l'intérieur du ressort, la pénétration s'effectuant jusqu'à ce que le bout du ressort vienne porter contre la butée 7'''g. Ce mode d'exécution permet un double contact avec les spires de ressort pour permettre une meilleure élimination de la résonance.

La liaison 7'''' suivant fig. 10 reprend le mode d'exécution de la liaison 7'' à laquelle on a adjoint les deux branches convergentes 7'd, 7'e de la liaison 7' de fig. 5. Là encore, on obtient deux zones de friction avec le ressort pour améliorer l'élimination de l'entrée en résonance.

Enfin, on a illustré en fig. 11 une liaison 7''''' combinant la liaison 7''' de fig. 9 et celle 7' de fig. 5. Cette liaison permet de créer trois zones de contact avec les spires du ressort.

Il va de soi que la partie supérieure ou tête des dispositifs illustrés en fig. 2, 5 et 8 à 11 pourra être fabriquée séparément, c'est-à-dire sans la tige et le harpon pour former une liaison surmoulée au niveau de la butée sur l'extrémité inférieure d'une des lisses 4 illustrées en fig. 1. Grâce à cette structure, les deux bouts de chaque ressort 5 pourraient être assemblés conformément à l'invention d'une part à une lisse 4, d'autre part à un organe fixe tel que 6.

Conformément à une autre variante de l'invention, on prévoit la réalisation d'un organe réalisé au moyen de deux dispositifs 7 orientés en opposition l'un par rapport à l'autre par leur butée, de manière qu'ils puissent respectivement coopérer avec les bouts de deux ressorts afin de les assembler dans le prolongement l'un de l'autre et d'éviter leur entrée en résonance.

## Revendications

1. Dispositif d'assemblage ou de liaison du bout d'un ressort hélicoïdal (5) par rapport à un autre organe (6), du genre dont l'extrémité est pourvue d'un embout fileté (7a) destiné à se visser dans les spires de ladite extrémité du ressort (5), et comportant un élément en une matière élastique coopérant avec ladite extrémité du ressort de manière à supprimer la résonance de celui-ci lorsqu'il est soumis à des tractions successives rapides, caractérisé en ce que l'élément élastique est consitué par au moins deux branches élastiques aptes à frotter sur les spires de ladite extrémité du ressort.

2. Dispositif (7) suivant la revendication 1, caractérisé en ce que ses deux branches élastiques (7d, 7e) sont divergentes et en ce que leurs faces extérieures se trouvent à l'état libre desdites branches inscrites dans une circonférence dont le diamètre est supérieur à celui interne du ressort (5).

3. Dispositif (7') suivant la revendication 1, caractérisé en ce que ses deux branches élastiques (7'd, 7'e) sont convergentes, une partie au moins de la surface de leurs faces intérieures en vis-à-vis étant distantes d'une valeur inférieure au diamètre extérieur du ressort (5).

4. Dispositif (7") suivant la revendication 1, caractérisé en ce que ses deux branches (7"d, 7"e) sont courbes et en ce que leurs extrémités libres sont solidaires pour former une pointe (7"f) qui facilite l'introduction dans le ressort.

5. Dispositif d'assemblage (7"') suivant la revendication 2, caractérisé en ce que ses deux branches sont courbes et en ce que leurs extrémités libres sont solidaires pour former une pointe qui facilite l'introduction dans le ressort.

6. Dispositif d'assemblage (7"") suivant la revendication 3, caractérisé en ce qu'il comporte en outre un élément interne formé de deux branches courbes dont les extrémités libres sont solidaires pour former une pointe, cet élément pénétrant dans le ressort.

7. Dispositif d'assemblage (7''''') suivant la revendication 6, caractérisé en ce que l'élément interne comporte un prolongement constitué de deux branches élastiques divergentes dont les faces extérieures se trouvent à l'état libre inscrites dans une circonférence dont le diamètre est supérieur à celui interne du ressort.

8. Dispositif suivant l'une quelconque des revendications précédentes, caractérisé en ce qu'il est moulé sur l'une des extrémités d'une lisse (4) d'une mécanique d'armure pour métier à tisser.

9. Dispositif suivant l'une quelconque des revendications 1 à 7, caractérisé en ce qu'il est prévu double afin de servir de liaison à deux ressorts hélicoïdaux (5) disposés dans le prolongement l'un de l'autre.

## Patentansprüche

1. Vorrichtung zur Befestigung oder Verbindung eines Endes einer Spiralfeder (5) mit einem anderen Element (6), wobei das Endteil der Vorrichtung mit einem ein Gewinde aufweisenden Ansatzstück (7a) versehen ist, welches zum Einschrauben in die Windungen des Endteils der Feder (5) bestimmt ist, und ein Element aus einem elastischen Material aufweist, das mit dem Endteil der Feder derart zusammenwirkt, daß eine Resonanz dieser Feder, wenn sie einem fortwährenden schnellen Ziehen unterworfen ist, verhindert ist, **dadurch gekennzeichnet, daß** das elastische Element durch wenigsens zwei elastische Schenkel gebildet ist, die in der Lage sind, eine Reibung zu den Windungen des Endteils der Feder herbeizuzühren.

2. Vorrichtung (7) nach Anspruch 1, **dadurch gekennzeichnet, daß** ihre zwei elastischen Schenkel (7d, 7e) auseinanderlaufen und daß deren Außenflächen sich in der freien Lage der besagten Schenkel auf einem Umkreis angeordnet befinden, dessen Durchmesser größer als der Innendurchmesser der Feder (5) ist.

3. Vorrichtung (7') nach Anspruch 1, **dadurch gekennzeichnet, daß** ihre zwei elastischen Schenkel (7'd, 7'e) zueinanderlaufen, wobei wenigstens ein Teil der Oberfläche ihrer gegenüberliegenden Innenseiten mit einem Wert voneinander entfernt sind, welcher geringer als der Außendurchmesser der Feder (5) ist.

4. Vorrichtung (7") nach Anspruch 1, **dadurch gekennzeichnet, daß** ihre zwei Schenkel (7"d, 7"e) gekrümmt sind und daß deren freien Enden zum Bilden einer Spitze (7"f) einstückig miteinander verbunden sind, welche das Einführen in die Feder erleichtert.

5. Befestigungsvorrichtung (7"') nach Anspruch 2, **dadurch gekennzeichnet, daß** ihre zwei Schenkel gekrümmt sind und daß deren freie Enden zum Bilden einer Spitze einstückig miteinander verbunden sind, welche das Einführen in die Feder erleichert.

6. Befestigungsvorrichtung (7"") nach Anspruch 3, **dadurch gekennzeichnet, daß** sie ferner ein Innenelement aufweist, das aus zwei gekrümmten Schenkeln gebildet ist, deren freie Enden zum Bilden einer Spitze einstückig miteinander verbunden sind, wobei dieses Element in die Feder eindringt.

7. Befestigungsvorrichtung (7""') nach Anspruch 6, **dadurch gekennzeichnet, daß** das Innenelement eine Verlängerung aufweist, die aus zwei elastischen, auseinanderlaufenden Schenkeln gebildet ist, deren Außenflächen sich in der freien Lage auf einem Umkreis angeordnet befinden, dessen Durchmesser größer als der Innendurchmesser der Feder ist.

8. Vorrichtung nach einem der vorhergehenden Ansprüche, **dadurch gekennzeichnet, daß** sie an einem der Enden einer Litze (4) einer Schaftmaschine für einen Webstuhl angeformt ist.

9. Vorrichtung nach einem der Ansprüche 1 bis 7, **dadurch gekennzeichnet, daß** sie doppelt vorgesehen ist, um als Verbindung zu zwei Spiralfedern (5) zu dienen, welche hintereinander angeordnet sind.

## Claims

1. Device for assembling or connecting the end of a coil spring (5) to another element (6), of the kind in which the end is provided with a threaded adaptor (7a) intended to screw into the turns of the said end of the spring (5), and including a member made of an elastic material interacting with the said end of the spring in such a way as to eliminate the resonance thereof when subjected to tensile forces in quick succession, characterized in that the elastic member consists of at least two elastic arms capable of rubbing against the turns of the said end of the spring.

2. Device (7) according to Claim 1, characterized in that its two elastic arms (7d, 7e) diverge and in that their outer faces, when the said arms are unconstrained, fall inside a circumference the diameter of which is greater than the inside diameter of the spring (5).

3. Device (7') according to Claim 1, characterized in that its two elastic arms (7'd, 7'e) converge, at least part of the surface of their opposing interior faces being less far apart than the length of the outside diameter of the spring (5).

4. Device (7") according to Claim 1, characterized in that its two arms (7"d, 7"e) are curved and in that their free ends are joined together to form a point (7"f) making it easier to introduce into the spring.

5. Assembly device (7"') according to Claim 2, characterized in that its two arms are curved and in that their free ends are joined together to form a point making it easier to introduce into the spring.

6. Assembly device (7"") according to Claim 3, characterized in that it furthermore includes an internal member formed from two curved arms the free ends of which are joined together to form a point, this member penetrating into the spring.

7. Assembly device (7""') according to Claim 6, characterized in that the internal member includes an extension consisting of two diverging elastic arms the outer faces of which when unconstrained fall inside a circumference the diameter of which is greater than the inside diameter of the spring.

8. Device according to any one of the preceding claims, characterized in that it is moulded onto one of the ends of a heald (4) of a dobby for a weaving loom.

9. Device according to any one of Claims 1 to 7, characterized in that it is double-ended so that it can be used to connect two coil springs (5) arranged in line with one another.
